# FASCICULE DE BREVET EUROPEEN

(11) **EP 0 995 386 B1**
(45) Date de publication et mention de la délivrance du brevet: **22.01.2003**
(21) Numéro de dépôt: 99402494.1
(22) Date de dépôt: 11.10.1999
(51) Int. Cl.: A47J 27/18

(54) **Installation de cuisson**
Vorrichtung zum Kochen
Installation for cooking

(30) Priorité: 19.10.1998 FR 9813179
(43) Date de publication de la demande: 26.04.2000
(73) Titulaire: ARMOR INOX SA, F-56430 Mauron (FR)
(72) Inventeur: Dreano, Claude, 56430 Mauron (FR)
(74) Mandataire: Maillet, Alain

(56) Documents cités:
- EP-A- 0 334 782
- US-A- 4 173 993
- US-A- 4 188 794
- US-A- 4 270 598

## Description

La présente invention concerne une installation de cuisson d'aliments par trempage dans un liquide chaud suivi d'un trempage dans au moins un liquide froid. Plus particulièrement, l'invention concerne une installation comportant une pluralité de cuves de cuisson, une centrale de chauffage pour l'obtention d'un liquide chaud, une centrale de réfrigération pour l'obtention d'un liquide réfrigéré, et un ensemble de canalisations pour l'acheminement des liquides.

Une installation de ce type est décrite dans le document de brevet européen EP-B-334 782. Cette installation est notamment prévue pour permettre de programmer dans chaque cuve la cuisson des aliments qu'elle contient, indépendamment des autres cuves.

Ladite installation est telle que les centrales de chauffage et de réfrigération sont installées à une hauteur nettement supérieure à celle des cuves de cuisson, de manière à laisser suffisamment de place à un engin de levage, tel qu'un palan, pour l'accrochage et l'acheminement des aliments à cuire dans les cuves et des aliments cuits hors desdites cuves.

De plus, à chaque centrale de chauffage ou de réfrigération est reliée une canalisation de collecte du liquide à chauffer ou à refroidir, respectivement, par l'intermédiaire d'une entrée que comporte ladite centrale. A chaque centrale est également reliée une canalisation de distribution de liquide chaud ou froid, selon le cas, par l'intermédiaire d'une sortie que comporte ladite centrale.

Une canalisation de descente est prévue pour relier chaque canalisation de distribution de liquide à la cuve de cuisson en contrebas, de sorte à alimenter cette dernière en liquide chaud ou froid. Une canalisation de remontée est également prévue pour relier chaque cuve de cuisson à chacune desdites canalisations de collecte, par l'intermédiaire d'une pompe dont la sortie de refoulement est elle-même reliée au bas de ladite canalisation de remontée.

Le but de la présente invention est de proposer une nouvelle installation de cuisson d'aliments par trempage dans un liquide chaud suivi d'un trempage dans au moins un liquide froid, ladite installation comportant une cuve ou une pluralité de cuves de cuisson pourvues chacune d'une entrée de liquide, une centrale de chauffage pour l'obtention d'un liquide chaud, une centrale de réfrigération pour l'obtention d'un liquide réfrigéré et des canalisations de remplissage pour l'acheminement desdits liquides jusqu'aux entrées respectives desdites cuves, qui présente une structure simple et, par conséquent, un encombrement réduit.

A cet effet, une installation selon l'invention comporte des pompes réversibles qui sont chacune prévues, d'une part, pour permettre l'écoulement desdits liquides dans une cuve en direction de ladite entrée et, d'autre part, pour permettre le retour desdits liquides à partir de ladite entrée de cuve, via l'une desdites canalisations de remplissage et en direction desdites centrales.

Selon une autre caractéristique de l'invention, ladite installation est du type où chaque cuve est pourvue d'une sortie de liquide au-dessus de ladite entrée, et elle est telle que ladite sortie est reliée à ladite canalisation de remplissage et de retour correspondante par une canalisation pourvue d'une électrovanne.

Selon une autre caractéristique de l'invention, dans sa partie adjacente auxdites centrales, chaque canalisation de remplissage et de retour est reliée à chacune desdites centrales par l'intermédiaire de deux canalisations de liaison pourvues d'électrovannes, respectivement.

Selon une autre caractéristique de l'invention, les extrémités libres desdites canalisations de liaison à ladite centrale de chauffage et les extrémités libres desdites canalisations de liaison à ladite centrale de réfrigération sont prévues du côté de ladite centrale correspondante qui est le plus éloigné de l'autre centrale.

Selon une autre caractéristique de l'invention, ladite installation est du type où elle comporte une pluralité de cuves alignées, et elle est telle que les deux canalisations de liaison relatives à l'une des cuves d'extrémité sont reliées à une même canalisation d'alimentation en liquide à température ambiante, par l'intermédiaire de deux canalisations d'arrivée, respectivement.

Selon une autre caractéristique de l'invention, chaque canalisation d'arrivée relie une canalisation de liaison à ladite canalisation d'alimentation, entre l'électrovanne et l'extrémité libre correspondantes de ladite canalisation de liaison, pour l'alimentation desdites centrales.

Selon une autre caractéristique de l'invention, les extrémités desdites canalisations de remplissage et de retour qui sont adjacentes auxdites centrales respectivement pourvues d'électrovannes, et qui sont reliées à ladite canalisation d'alimentation par une canalisation commune.

Selon une autre caractéristique de l'invention, lesdites canalisations de liaison relatives à l'autre cuve d'extrémité sont reliées à une canalisation d'évacuation par l'intermédiaire de deux canalisations de départ, respectivement.

Selon une autre caractéristique de l'invention, chaque canalisation de départ relie une canalisation de liaison à ladite canalisation d'évacuation, entre l'électrovanne et l'extrémité libre correspondantes de ladite canalisation de liaison.

Selon une autre caractéristique de l'invention, chaque canalisation de remplissage et de retour est pourvue de deux électrovannes montées en parallèle, l'une desdites électrovannes étant du type à réglage de débit.

Selon une autre caractéristique de l'invention, lesdites centrales de chauffage et de réfrigération sont installées à une hauteur nettement supérieure à celle de chaque cuve de cuisson.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, dans lesquels:
la Fig. 1 est une vue schématique en perspective d'une installation selon l'invention,
la Fig. 2 est une vue schématique en perspective d'une partie de ladite installation illustrant une séquence de fonctionnement de ladite installation,
la Fig. 3 est une vue schématique en perspective de ladite partie illustrant une autre séquence de fonctionnement,
la Fig. 4 est une vue schématique en perspective de ladite partie illustrant une autre séquence de fonctionnement,
la Fig. 5 est une vue schématique en perspective de ladite partie illustrant une autre séquence de fonctionnement,
la Fig. 6 est une vue schématique en perspective de ladite partie illustrant une autre séquence de fonctionnement,
la Fig. 7 est une vue schématique en perspective de ladite partie illustrant une autre séquence de fonctionnement,
la Fig. 8 est une vue schématique en perspective de ladite partie illustrant une autre séquence de fonctionnement, et
la Fig. 9 est une vue schématique en perspective de ladite partie illustrant une autre séquence de fonctionnement.

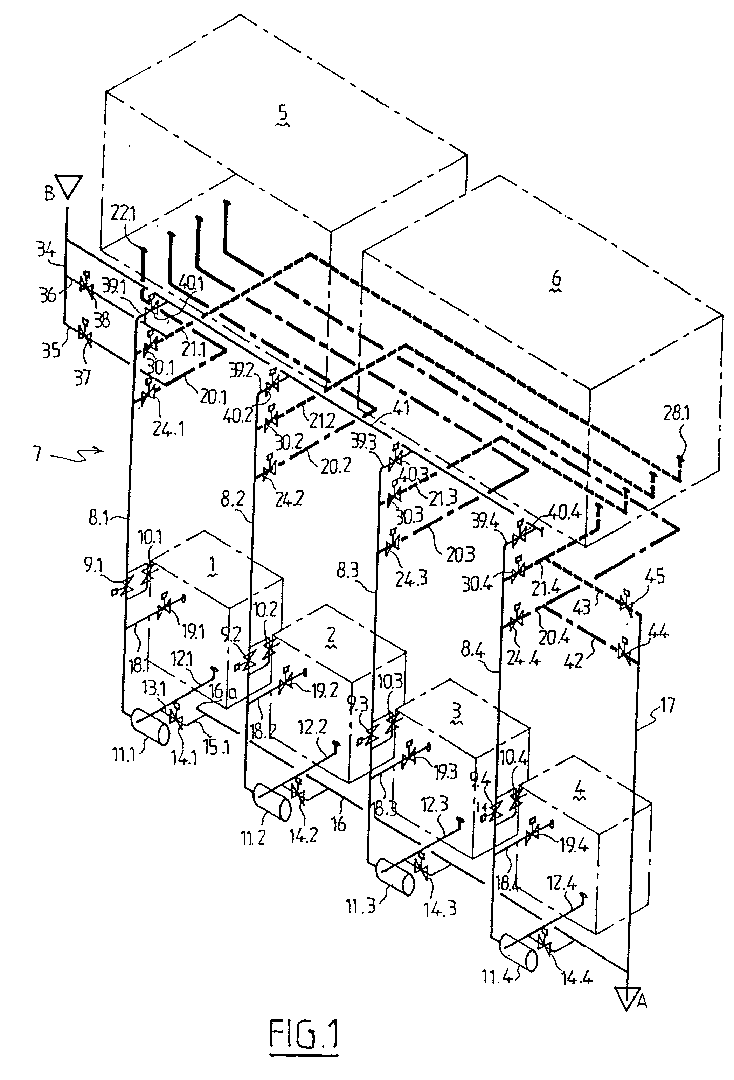

L'installation montrée dans l'exemple de la Fig. 1 comporte quatre cuves de cuisson 1 à 4, une centrale de chauffage 5, une centrale de réfrigération 6 et un ensemble de canalisations 7 reliant chaque centrale 5, 6 à chacune desdites cuves 1 à 4.

Dans cet exemple de réalisation, les cuves 1 à 4 et les centrales 5 et 6 présentent respectivement les formes détaillées dans le document précité EP-B-334 782, et lesdites cuves 1 à 4 sont également prévues alignées en contrebas desdites centrales 5 et 6.

Cependant, on notera qu'une installation selon l'invention ne se limite pas à cet exemple de réalisation, et qu'elle pourrait comporter une ou plusieurs cuves 1 à 4 prévues à la même hauteur que lesdites centrales 5 et 6.

Selon une caractéristique essentielle de la présente invention, l'ensemble de canalisations 7 comporte des canalisations 8.1 à 8.4, verticales dans ledit exemple de réalisation, qui sont respectivement associées auxdites cuves 1 à 4. Chaque canalisation 8.1 à 8.4 est pourvue d'une électrovanne 9.1 à 9.4 dans sa partie adjacente à la cuve 1 à 4 correspondante, et une vanne à réglage de débit 10.1 à 10.4 est montée en parallèle sur chaque électrovanne 9.1 à 9.4.

Chaque canalisation 8.1 à 8.4 est prévue pour permettre, d'une part, l'acheminement de liquide chaud ou froid provenant de l'une ou l'autre des centrales 5 ou 6 en direction de la cuve 1 à 4 correspondante pour la remplir et, d'autre part, le retour du liquide contenu dans ladite cuve 1 à 4 en direction de l'une ou l'autre desdites centrales 5 ou 6, par l'intermédiaire d'une pompe réversible 11.1 à 11.4.

Chaque pompe 11.1 à 11.4 est installée de manière à relier l'extrémité correspondante de la canalisation 8.1 à 8.4 à une entrée de ladite cuve 1 à 4 située dans sa partie inférieure interne, par l'intermédiaire d'une canalisation 12.1 à 12.4. Dans l'exemple de la Fig. 1, chaque canalisation 12.1 à 12.4 est horizontale et perpendiculaire à la direction d'alignement des cuves 1 à 4, et elle se termine en étant coudée vers le haut pour communiquer avec ladite entrée.

On entendra par pompe réversible 11.1 à 11.4 une pompe prévue soit pour aspirer soit pour refouler du liquide à l'intérieur de chacune des deux canalisations 8.1 à 8.4 et 12.1 à 12.4, lesquelles constituent alors à la fois une entrée ou une sortie de liquide pour ladite pompe 11.1 à 11.4, selon le mode de fonctionnement utilisé pour celle-ci.

Dans ce qui suit, on qualifiera de longitudinale la direction horizontale d'alignement des cuves 1 à 4, et de transversale la direction horizontale perpendiculaire audit alignement.

Des canalisations 13.1 à 13.4 pourvues d'électrovannes 14.1 à 14.4 sont respectivement montées à angle droit sur lesdites canalisations 12.1 à 12.4, et elles sont reliées par un coude 15.1 à 15.4 à une canalisation longitudinale 16. Cette dernière est reliée à une canalisation verticale 17 dans l'exemple de la Fig. 1 pour l'évacuation de liquide en direction des égouts (voir flèche A), et elle est fermée en son extrémité 16a qui est opposée à ladite canalisation 17.

Chaque canalisation 8.1 à 8.4 est reliée, dans sa partie adjacente à la cuve correspondante 1 à 4 et en dessous de ladite électrovanne 9.1 à 9.4 en référence à la Fig. 1, à une sortie de ladite cuve 1 à 4 située dans sa partie supérieure interne par l'intermédiaire d'une canalisation transversale 18.1 à 18.4. Chaque canalisation transversale 18.1 à 18.4 est pourvue d'une électrovanne 19.1 à 19.4.

Dans sa partie adjacente aux centrales 5 et 6, chaque canalisation 8.1 à 8.4 est reliée à chacune de ces centrales 5 et 6 par l'intermédiaire de deux canalisations de liaison 20.1 à 20.4 et 21.1 à 21.4, respectivement.

Chaque canalisation 20.1 à 20.4 a son extrémité libre 22.1 à 22.4 qui est reliée à la partie inférieure interne de la centrale de chauffage 5, de préférence en sorte que les extrémités libres respectives 22.1 à 22.4 des canalisations 20.1 à 20.4 soient alignées suivant une direction transversale, du côté Sa de la centrale 5 le plus éloigné de l'autre centrale 6.

Dans l'exemple de la Fig. 1, chaque canalisation 20.1 à 20.4 comporte, à partir de la canalisation 8.1 à 8.4 correspondante, un premier tronçon transversal 23.1 à 23.4 pourvu d'une électrovanne 24.1 à 24.4, un second tronçon longitudinal 25.1 à 25.4 prolongeant le précédent par un coude 26.1 à 26.4 vers le côté précité 5a de la centrale 5, et un troisième tronçon vertical 27.1 à 27.4 prolongeant le précédent vers le fond 5b de ladite centrale 5 jusqu'à ladite extrémité 22.1 à 22.4.

D'une manière analogue, chaque canalisation 21.1 à 21.4 a son extrémité libre 28.1 à 28.4 qui est reliée à la partie inférieure interne de la centrale de réfrigération 6, de préférence en sorte que les extrémités libres respectives 28.1 à 28.4 des canalisations 21.1 à 21.4 soient alignées suivant une direction transversale, du côté 6a de la centrale 6 le plus éloigné de l'autre centrale 5.

Chaque canalisation 21.1 à 21.4 comporte un premier tronçon transversal 29.1 à 29.4 pourvu d'une électrovanne 30.1 à 30.4 et prévu par exemple au-dessus dudit tronçon 23.1 à 23.4, un second tronçon longitudinal 31.1 à 31.4 prolongeant le précédent par un coude 32.1 à 32.4 vers le côté précité 6a de la centrale 6, et un troisième tronçon 33.1 à 33.4 prolongeant le précédent vers le fond 6b de ladite centrale 6 jusqu'à ladite extrémité 28.1 à 28.4.

Dans l'exemple de la Fig. 1, on notera cependant que la canalisation 8.4 relative à la cuve d'extrémité 4 est prévue à proximité dudit côté 6a de la centrale 6. Il en résulte que la canalisation 21.4 correspondante ne comporte pas ledit second tronçon longitudinal 31.4.

En référence à l'exemple de la Fig. 1, les deux canalisations 20.1, 21.1 relatives à l'autre cuve d'extrémité 1 sont reliées à une même canalisation verticale 34, elle-même reliée au réseau d'alimentation en eau de ville à température ambiante (voir flèche B), par l'intermédiaire de deux canalisations longitudinales d'arrivée 35 et 36, respectivement. Plus précisément, les canalisations d'arrivée 35 et 36 relient respectivement les premiers tronçons 23.1, 29.1 desdites canalisations 20.1 et 21.1 à ladite canalisation 34, entre les électrovannes 24.1, 30.1 et les coudes respectifs 26.1 et 32.1 desdits tronçons 23.1 et 29.1. De plus, chaque canalisation longitudinale 35, 36 est pourvue d'une électrovanne 37, 38.

Les extrémités des canalisations 8.1 à 8.4 qui sont adjacentes aux centrales 5 et 6 se prolongent respectivement par des tronçons transversaux 39.1 à 39.4 pourvus d'électrovannes 40.1 à 40.4. Ces tronçons 39.1 à 39.4 sont reliés à ladite canalisation verticale 34 d'alimentation en eau de ville par une canalisation longitudinale commune 41. Cette dernière est fermée en son extrémité qui est adjacente à ladite canalisation verticale 8.4.

Les canalisations 20.4 et 21.4, qui sont prévues du côté opposé à la canalisation d'alimentation en eau de ville 34, sont quant à elles reliées à ladite canalisation verticale d'évacuation 17 par l'intermédiaire de deux canalisations longitudinales de départ 42 et 43, respectivement. Plus précisément, ces canalisations de départ 42 et 43 relient respectivement les premiers tronçons 23.4, 29.4 desdites canalisations 20.4 et 21.4 à ladite canalisation 17, entre les électrovannes 24.4, 30.4 et les coudes respectifs 26.4 et 32.4 desdits tronçons 23.1 et 29.1. De plus, chaque canalisation longitudinale 42, 43 est pourvue d'une électrovanne 44, 45.

On notera que chaque cuve 1 à 4 est de préférence pourvue de détecteurs de niveaux haut et très haut de liquide, d'un détecteur de niveau bas, et d'une sonde de température, qui ne sont pas montrés à la Fig. 1. Les centrales 5 et 6 sont quant à elles pourvues de moyens de régulation de température (non représentés).

Enfin, une unité de commande gérée de préférence par un microprocesseur est prévue pour commander les électrovannes 9.1 à 9.4, 10.1 à 10.4, 14.1 à 14.4, 19.1 à 19.4, 24.1 à 24.4, 30.1 à 30.4, 40.1 à 40.4, 37, 38, 44 et 45 et les pompes 11.1 à 11.4, en fonction des données reçues des détecteurs et des sondes (cette unité de commande n'est pas non plus représentée pour des raisons de clarté de la Fig. 1).

Cette installation selon l'invention fonctionne de la manière suivante.

On procède d'abord au remplissage des centrales 5 et 6 en eau de ville, laquelle circule par les canalisations 34, 35, 20.1 et 22. 1 pour la centrale 5 et par les canalisations 34, 36, 21.1 et 28.1 pour la centrale 6, seules les électrovannes 37 et 38 étant alors ouvertes.

Une fois que les centrales 5 et 6 sont pleines et en marche, on introduit des aliments, par exemple emballés sous vide, dans les cuves 1 à 4.

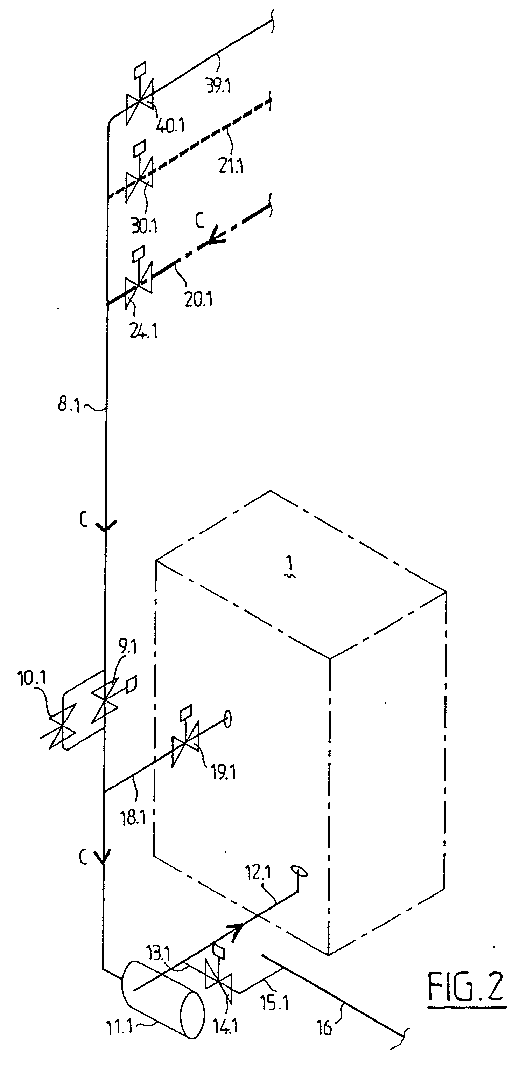

Puis, comme cela est illustré à la Fig. 2 pour l'une des cuves 1 de l'installation, on ouvre seulement les électrovannes 24.1 et 9.1 des canalisations 20.1 et 8.1, respectivement. On notera que les électrovannes 30.1 et 40.1 relatives à l'eau réfrigérée et à l'eau de ville demeurent fermées. L'eau chauffée par la centrale 5 descend alors par gravité jusqu'à ladite entrée de la cuve 1, par 22.1, la canalisation 20.1, l'électrovanne 24.1, la canalisation 8.1 (laquelle fait alors office de canalisation de remplissage), l'électrovanne 9.1 et la canalisation 12.1 (voir flèches C).

Il s'agit de la séquence de remplissage en eau chaude de la cuve 1.

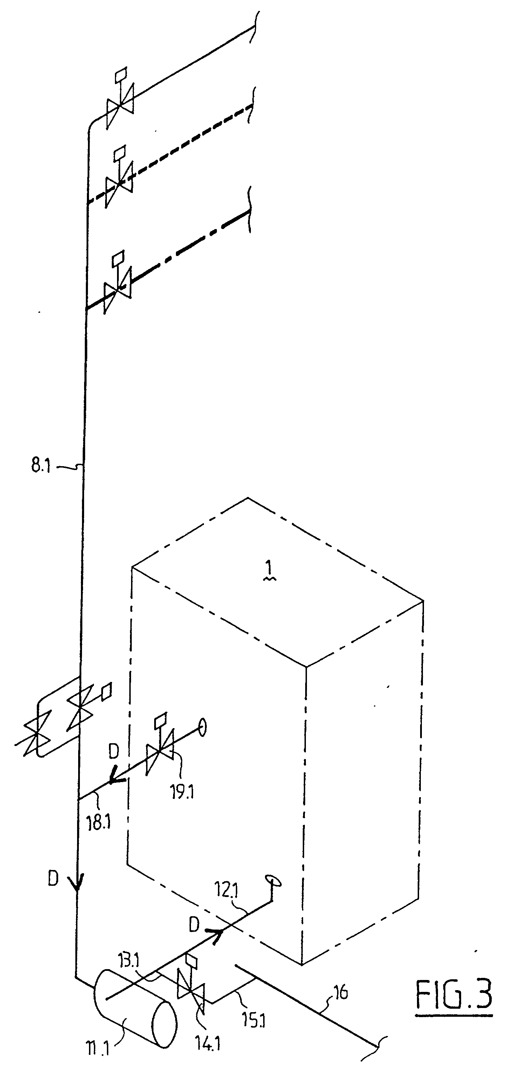

Comme cela est illustré à la Fig. 3 pour la même cuve 1, on ferme ensuite les électrovannes 24.1 et 9.1, on ouvre la seule électrovanne 19.1 de la canalisation transversale 18.1, et l'on met en marche la pompe réversible 11.1 de telle sorte que son entrée d'aspiration et sa sortie de refoulement soient respectivement reliées aux canalisations 8.1 et 12.1. De l'eau chaude contenue dans la cuve 1 sort alors de cette dernière par l'électrovanne 19.1 et la canalisation 18.1 via la pompe 11.1, et est recyclée dans ladite cuve 1 par les canalisations 8.1, 12.1 et ladite entrée (voir flèches D).

Il s'agit de la séquence de circulation interne de l'eau chaude dans la cuve 1, qui est prévue pour assurer par brassage une bonne homogénéisation de la température de l'eau dans ladite cuve 1.

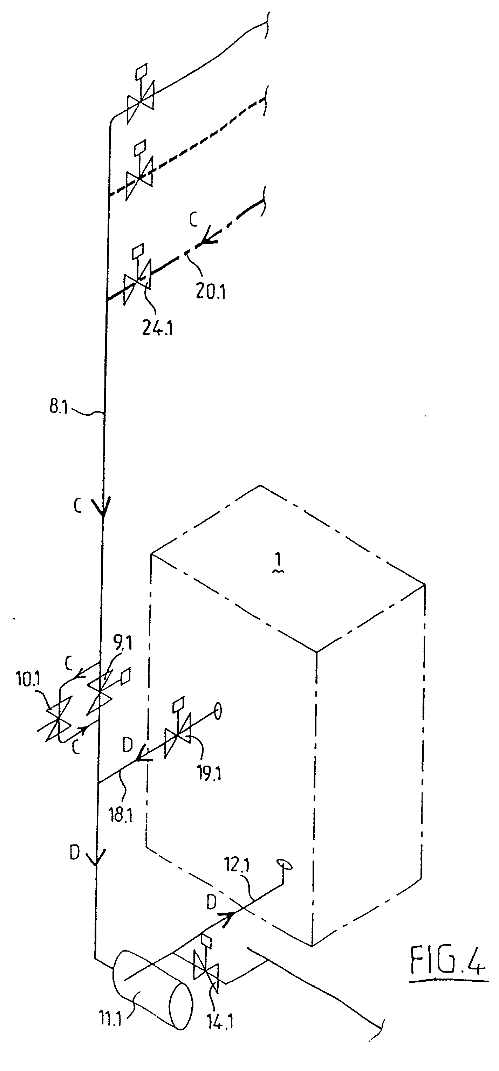

Comme cela est illustré à la Fig 4 où un appoint d'eau chaude est nécessaire dans la cuve 1, on ouvre ensuite les électrovannes 24.1 et 10.1 en plus de l'électrovanne 19.1 précitée, la pompe 11.1 étant en marche avec le même sens de refoulement que précédemment. L'eau chaude qui est générée dans la canalisation 20.1 par la centrale 5 passe par l'électrovanne 24.1 pour descendre dans la canalisation 8.1 (flèches C), en passant par la vanne à débit réduit 10.1 du fait de la fermeture de l'électrovanne 9.1.

Sous l'action de la pompe 11.1, de l'eau chaude contenue dans la cuve 1 quitte ladite sortie dont elle est pourvue par l'électrovanne 19.1, la canalisation 18.1 et est recyclée dans ladite entrée de la manière précitée (flèches D), en s'étant mélangée au point de jonction des canalisations 8.1 et 18.1 à ladite eau chaude descendant de la centrale 5.

Il résulte de ce mélange que le débit d'eau entrant dans la cuve 1 est légèrement supérieur à celui quittant ladite cuve 1 pendant cette séquence d'appoint, d'où l'augmentation recherchée du niveau d'eau chaude dans ladite cuve 1.

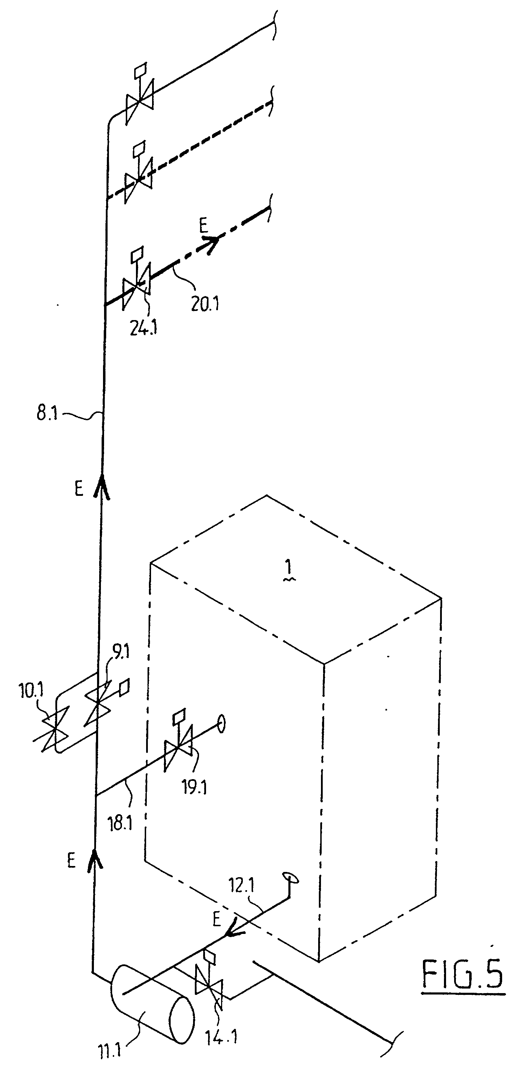

Comme cela est illustré à la Fig. 5 où une diminution du niveau d'eau chaude est au contraire nécessaire dans la cuve 1, on ouvre à cet effet les électrovannes 9.1 et 24.1, les électrovannes 10.1 et 19.1 étant fermées, et l'on met en marche la pompe réversible 11.1 en sens inverse, c'est-à-dire de telle sorte que son entrée d'aspiration et sa sortie de refoulement soient respectivement reliées aux canalisations 12.1 et 8.1. Comme précédemment, on notera que les électrovannes 30.1 et 40.1 relatives à l'eau réfrigérée et à l'eau de ville demeurent fermées.

Sous l'action de la pompe 11.1, de l'eau chaude quitte ladite entrée de la cuve 1 par la canalisation 12.1 et remonte jusqu'à la centrale de chauffe 5 par la canalisation 8.1 (laquelle fait alors office de canalisation de retour), les électrovannes 9.1, 24.1, la canalisation 20.1 et 22.1 (voir flèches E). On met un terme à cette séquence de retour d'eau chaude lorsque le niveau obtenu dans la cuve 1 est égal à celui qui est requis pour l'opération de cuisson des aliments qu'elle contient.

Lorsque la cuisson des aliments dans la cuve 1 est terminée, on procède à la vidange de ladite cuve 1 en mettant en oeuvre la séquence qui vient d'être décrite en référence à la Fig. 5, jusqu'à ce qu'il n'y ait plus d'eau chaude dans ladite cuve 1.

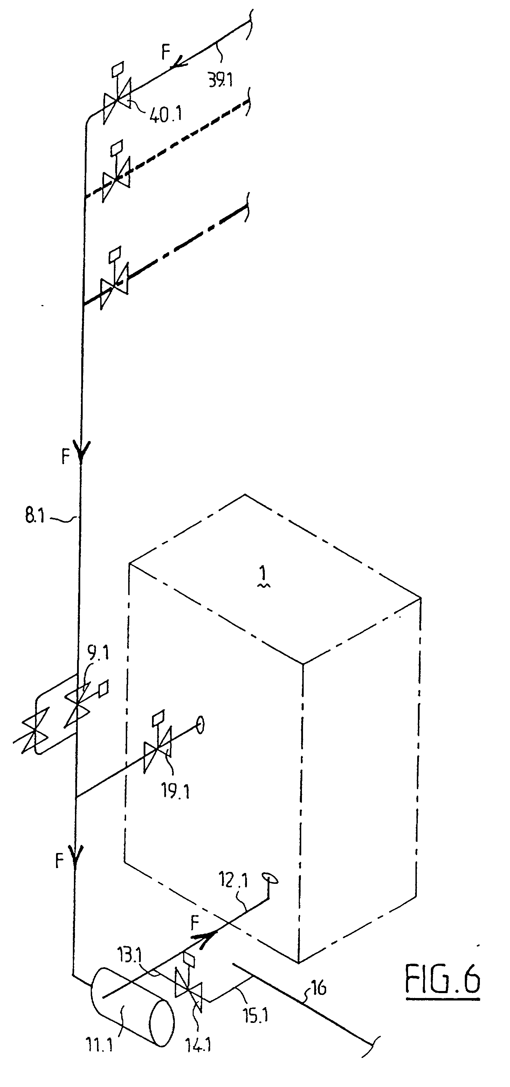

Comme cela est illustré à la Fig. 6, on procède ensuite à une séquence de remplissage de la cuve 1 en eau de ville à température ambiante. A cet effet, on ouvre seulement les électrovannes 40.1 et 9.1 des canalisations 39.1 et 8.1, respectivement. On notera que les électrovannes 24.1 et 30.1 relatives à l'eau réchauffée et à l'eau réfrigérée demeurent fermées. L'eau de ville descend alors par gravité jusqu'à l'entrée de la cuve 1, par les canalisations 34, 41, l'électrovanne 40.1, les canalisations 39.1, 8.1, l'électrovanne 9.1 et la canalisation 12.1 (voir flèches F).

On procède ensuite à une séquence de circulation interne par recyclage de l'eau de ville contenue dans la cuve 1. A cet effet, on ferme les électrovannes 40.1 et 9.1, on ouvre la seule électrovanne 19. 1 de la canalisation transversale 18.1, et l'on met en marche la pompe réversible 11.1 de telle sorte que son entrée d'aspiration et sa sortie de refoulement soient respectivement reliées aux canalisations 8.1 et 12.1. L'eau de ville contenue dans la cuve 1 suit alors le trajet décrit en référence à la Fig. 3 précitée.

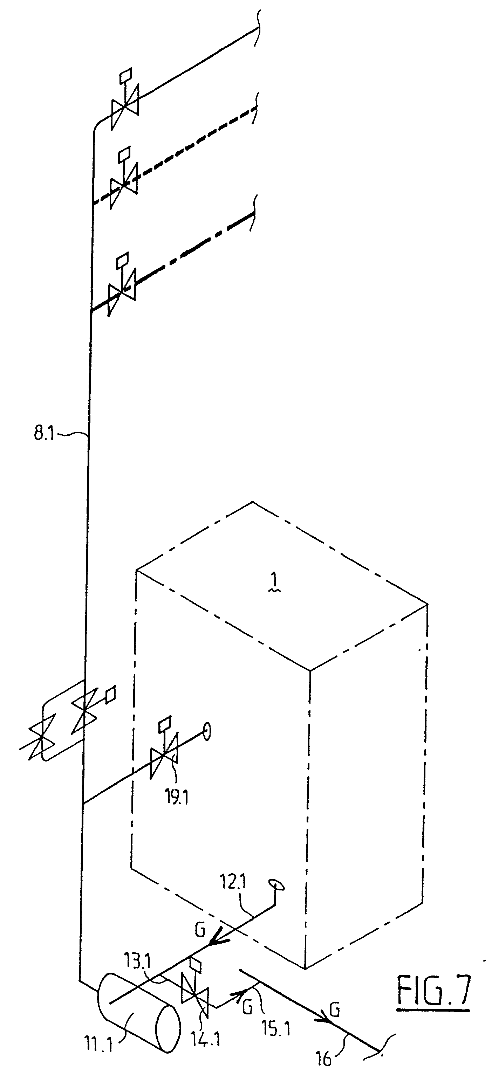

Puis, en vue de réaliser un appoint d'eau de ville dans la cuve 1, on procède de la même manière que celle indiquée en référence à la Fig. 6 et, en vue de réduire par la suite ledit niveau d'eau de ville dans ladite cuve 1, on procède de la manière suivante illustrée à la Fig. 7.

Comme cela est visible sur cette Fig., on ouvre seulement l'électrovanne 14.1, les autres étant fermées. De l'eau de ville quitte alors l'entrée de la cuve 1 et s'écoule en direction des égouts par les canalisations 12.1, 13.1, l'électrovanne 14.1, les canalisations 15.1, 16 et 17 (voir flèches G). On met un terme à cette séquence lorsque le niveau d'eau de ville dans la cuve 1 est égal à celui qui est requis pour un refroidissement des aliments qu'elle contient.

A la fin de ces opérations de refroidissement, on procède à la vidange de la cuve 1, de la manière indiquée ci-dessus en référence à ladite Fig. 7.

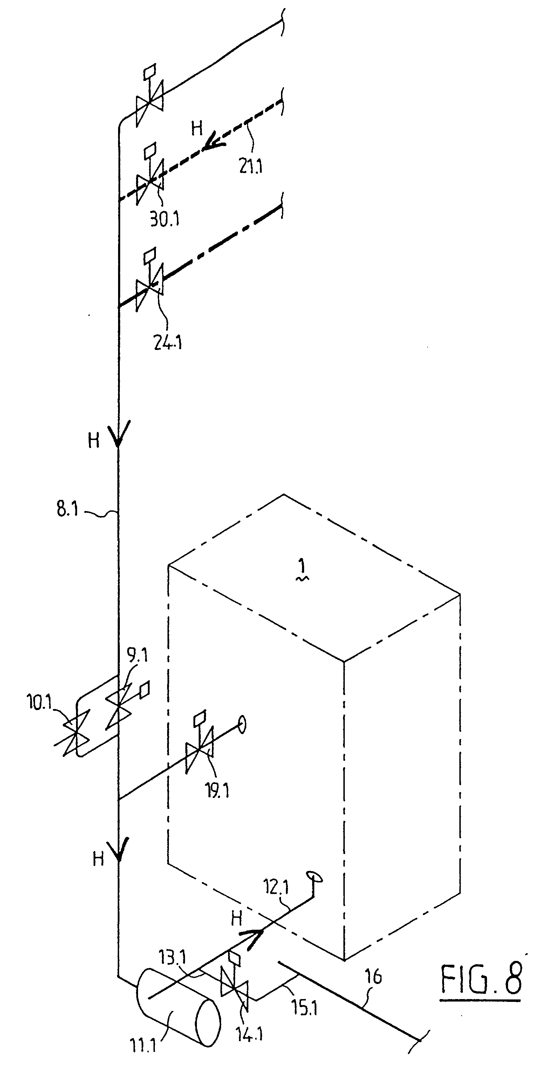

Comme cela est illustré à la Fig. 8, on procède ensuite à une séquence de remplissage de la cuve 1 en eau réfrigérée. A cet effet, on ouvre seulement les électrovannes 30.1 et 9.1 des canalisations 39.1 et 8.1, respectivement. On notera que les électrovannes 24.1 et 40.1 relatives à l'eau réchauffée et à l'eau réfrigérée demeurent fermées. L'eau réfrigérée descend alors par gravité jusqu'à l'entrée de la cuve 1, par la canalisation 21.1, l'électrovanne 30.1, la canalisation 8.1, l'électrovanne 9.1 et la canalisation 12.1 (voir flèches H).

On procède ensuite à une séquence de circulation interne par recyclage de l'eau réfrigérée contenue dans la cuve 1. A cet effet, on ferme les électrovannes 30.1 et 9.1, on ouvre la seule électrovanne 19. 1 de la canalisation transversale 18.1, et l'on met en marche la pompe réversible 11.1 de telle sorte que son entrée d'aspiration et sa sortie de refoulement soient respectivement reliées aux canalisations 8.1 et 12.1. L'eau réfrigérée contenue dans la cuve 1 suit alors le trajet décrit en référence à la Fig. 3 précitée.

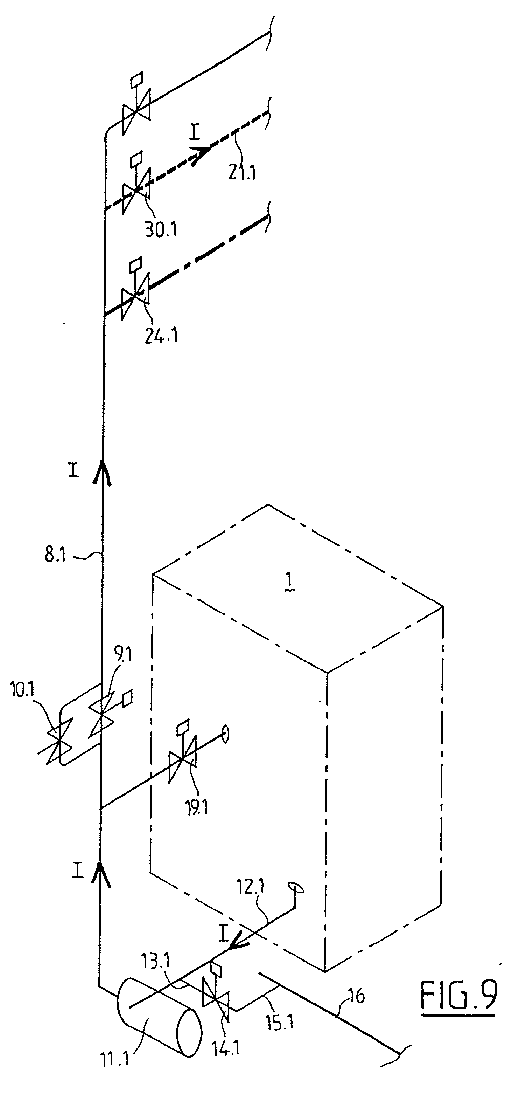

Puis, en vue de réaliser un appoint d'eau réfrigérée dans la cuve 1, on procède de la même manière que celle indiquée en référence à la Fig. 8 et, en vue de réduire par la suite ledit niveau d'eau de ville, on procède de la manière suivante illustrée à la Fig. 9.

Comme cela est visible sur cette Fig., on ouvre alors les seules électrovannes 9.1, 30.1, et l'on met en marche la pompe réversible 11.1 en sens inverse, c'est-à-dire de telle sorte que son entrée d'aspiration et sa sortie de refoulement soient respectivement reliées aux canalisations 12.1 et 8.1. Comme précédemment, on notera que les électrovannes 30.1 et 40.1 relatives à l'eau réfrigérée et à l'eau de ville demeurent fermées.

Sous l'action de la pompe 11.1, de l'eau réfrigérée quitte l'entrée de la cuve 1 par la canalisation 12.1 et remonte jusqu'à la centrale de réfrigération 6 par la canalisation 8.1, les électrovannes 9.1, 30.1, la canalisation 21.1 et 28.1 (voir flèches I). On met un terme à cette séquence de retour d'eau réfrigérée lorsque le niveau obtenu dans la cuve 1 est égal à celui qui est requis pour l'opération de réfrigération des aliments qu'elle contient.

A la fin de ces opérations de réfrigération, on procède à la vidange de la cuve 1, de la manière indiquée ci-dessus en référence à ladite Fig. 9.

Du fait du montage d'une pompe réversible 11.1 à 11.4 de la manière précitée, on notera notamment qu'une installation selon la présente invention peut fonctionner avec une canalisation unique 8.1 à 8.4 pour la descente et la remontée de liquide entre chaque source de liquide 5, 6 ou 34 et ladite cuve 1.

Il en résulte que ladite installation selon l'invention présente un encombrement réduit.

## Revendications

1. Installation de cuisson d'aliments par trempage dans un liquide chaud suivi d'un trempage dans au moins un liquide froid, ladite installation comportant une ou plusieurs cuves de cuisson (1 à 4) pourvues chacune d'une entrée de liquide, une centrale de chauffage (5) pour l'obtention d'un liquide chaud, une centrale de réfrigération (6) pour l'obtention d'un liquide réfrigéré et des canalisations de remplissage (8.1 à 8.4) pour l'acheminement desdits liquides jusqu'aux entrées respectives desdites cuves (1 à 4), **caractérisée en ce que** ladite installation comporte des pompes réversibles (11.1 à 11.4) qui sont chacune prévues, d'une part, pour permettre l'écoulement desdits liquides dans une cuve (1 à 4) en direction de ladite entrée et, d'autre part, pour permettre le retour desdits liquides à partir de ladite entrée de cuve (1 à 4), via l'une desdites canalisations de remplissage (8.1 à 8.4) et en direction desdites centrales (5 et 6).

2. Installation de cuisson d'aliments selon la revendication 1, du type où chaque cuve (1 à 4) est pourvue d'une sortie de liquide au-dessus de ladite entrée, **caractérisée en ce que** ladite sortie est reliée à ladite canalisation de remplissage et de retour (8.1 à 8.4) correspondante par une canalisation (18.1 à 18.4) pourvue d'une électrovanne (19.1 à 19.4).

3. Installation de cuisson d'aliments selon la revendication 1 ou 2, **caractérisée en ce que**, dans sa partie adjacente auxdites centrales (5 et 6), chaque canalisation de remplissage et de retour (8.1 à 8.4) est reliée à chacune desdites centrales (5 et 6) par l'intermédiaire de deux canalisations de liaison (20.1 à 20.4 et 21.1 à 21.4) pourvues d'électrovannes (24.1 à 24.4 et 30.1 à 30.4), respectivement.

4. Installation de cuisson d'aliments selon la revendication 3, **caractérisée en ce que** les extrémités libres (22.1 à 22.4) desdites canalisations (20.1 à 20.4) de liaison à ladite centrale de chauffage (5) et les extrémités libres (28.1 à 28.4) desdites canalisations (21.1 à 21.4) de liaison à ladite centrale de réfrigération (5) sont prévues du côté (Sa, 6a) de ladite centrale correspondante (5, 6) qui est le plus éloigné de l'autre centrale (6, 5).

5. Installation de cuisson d'aliments selon la revendication 3 ou 4 du type où elle comporte une pluralité de cuves (1 à 4) alignées, **caractérisée en ce que** les deux canalisations de liaison (20.1, 21.1) relatives à l'une des cuves d'extrémité (1) sont reliées à une même canalisation (34) d'alimentation en liquide à température ambiante, par l'intermédiaire de deux canalisations d'arrivée (35 et 36), respectivement.

6. Installation de cuisson d'aliments selon la revendication 5, **caractérisée en ce que** chaque canalisation d'arrivée (35, 36) relie une canalisation de liaison (20.1, 21.1) à ladite canalisation d'alimentation (34), entre l'électrovanne (24.1, 30.1) et l'extrémité libre (22.1, 28.1) correspondantes de ladite canalisation de liaison (20.1, 21.1), pour l'alimentation desdites centrales (5 et 6).

7. Installation de cuisson d'aliments selon la revendication 5 ou 6, **caractérisée en ce que** les extrémités desdites canalisations de remplissage et de retour (8.1 à 8.4) qui sont adjacentes auxdites centrales (5 et 6) sont respectivement pourvues d'électrovannes (40.1 à 40.4), et qui sont reliées à ladite canalisation d'alimentation (34) par une canalisation commune (41).

8. Installation de cuisson d'aliments selon une des revendications 5 à 7, **caractérisée en ce que** lesdites canalisations de liaison (20.4 et 21.4) relatives à l'autre cuve d'extrémité (4) sont reliées à une canalisation d'évacuation (17) par l'intermédiaire de deux canalisations de départ (42 et 43), respectivement.

9. Installation de cuisson d'aliments selon la revendication 8, **caractérisée en ce que** chaque canalisation de départ (42, 43) relie une canalisation de liaison (20.4, 21.4) à ladite canalisation d'évacuation (17), entre l'électrovanne (24.4, 30.4) et l'extrémité libre (22.4, 28.4) correspondante de ladite canalisation de liaison (20.4, 21.4).

10. Installation de cuisson d'aliments selon une des revendications précédentes, **caractérisée en ce que** chaque canalisation de remplissage et de retour (8.1 à 8.4) est pourvue de deux électrovannes (9.1 à 9.4 et 10.1 à 10.4) montées en parallèle, l'une desdites électrovannes (10.1 à 10.4) étant du type à réglage de débit.

11. Installation de cuisson d'aliments selon une des revendications précédentes, **caractérisée en ce que** lesdites centrales de chauffage (5) et de réfrigération (6) sont installées à une hauteur nettement supérieure à celle de chaque cuve de cuisson (1 à 4).

## Patentansprüche

1. Vorrichtung zum Kochen von Speisen durch Einlegen in eine heiße Flüssigkeit, gefolgt von einem Einlegen in mindestens eine kalte Flüssigkeit, welche Vorrichtung eine oder mehrere Kochwannen (1 bis 4), die jeweils mit einer Flüssigkeitseintrittsöffnung versehen sind, eine Heizzentrale (5) für den Erhalt einer heißen Flüssigkeit, eine Kühlzentrale (6) für den Erhalt einer gekühlten Flüssigkeit und Befüllungskanäle (8.1 bis 8.4) für die Beförderung der Flüssigkeiten zu den jeweiligen Eintrittsöffnungen der Wannen (1 bis 4) umfasst, **dadurch gekennzeichnet, dass** die Vorrichtung umkehrbare Pumpen (11.1 bis 11.4) umfasst, die jeweils einerseits dazu vorgesehen sind, das Abfließen der Flüssigkeiten in eine Wanne (1 bis 4) in Richtung der Eintrittsöffnung und andererseits den Rückfluss dieser Flüssigkeiten von der Wanneneintrittsöffnung (1 bis 4) über einen der Befüllungskanäle (8.1 bis 8.4) und in Richtung der Zentralen (5 und 6) zu ermöglichen.

2. Vorrichtung zum Kochen von Speisen nach Anspruch 1, bei der jede Wanne (1 bis 4) mit einer Flüssigkeitsaustrittsöffnung über der Eintrittsöffnung versehen ist, **dadurch gekennzeichnet, dass** die Austrittsöffnung mit dem Befüllungskanal und dem entsprechenden Rückflusskanal (8.1 bis 8.4) durch einen Kanal (18.1 bis 18.4) verbunden ist, der mit einem Magnetventil (19.1 bis 19.4) ausgestattet ist.

3. Vorrichtung zum Kochen von Speisen nach Anspruch 1 oder 2, **dadurch gekennzeichnet, dass** in ihrem an die Zentralen (5 und 6) angrenzenden Teil jeder Befüllungskanal und Rückflusskanal (8.1 bis 8.4) mit jeder der Zentralen (5 und 6) über zwei Verbindungskanäle (20.1 bis 20.4 und 21.1 bis 21.4) verbunden ist, die jeweils mit Magnetventilen (24.1 bis 24.4 und 30.1 bis 30.4) ausgestattet sind.

4. Vorrichtung zum Kochen von Speisen nach Anspruch 3, **dadurch gekennzeichnet, dass** die freien Enden (22.1 bis 22.4) der Kanäle (20.1 bis 20.4) zur Verbindung mit der Heizzentrale (5) und die freien Enden (28.1 bis 28.4) der Kanäle (21.1 bis 21.4) zur Verbindung mit der Kühlzentrale (5) auf der Seite (5a, 6a) der entsprechenden Zentrale (5, 6), die von der anderen Zentrale (6, 5) am weitesten entfernt ist, vorgesehen sind.

5. Vorrichtung zum Kochen von Speisen nach Anspruch 3 oder 4, umfassend eine Mehrzahl von ausgerichteten Wannen (1 bis 4), **dadurch gekennzeichnet, dass** die beiden Verbindungskanäle (20.1, 21.1), die sich auf eine der Endwannen (1) beziehen, mit einem selben Kanal (34) zur Flüssigkeitseinspei-sung bei Raumtemperatur über jeweils zwei Zuführkanäle (35 und 36) verbunden sind.

6. Vorrichtung zum Kochen von Speisen nach Anspruch 5, **dadurch gekennzeichnet, dass** jeder Zuführkanal (35, 36) einen Verbindungskanal (20.1, 21.1) mit dem Einspeisungskanal (34) zwischen dem entsprechenden Magnetventil (24.1, 30.1) und dem entsprechenden freien Ende (22.1, 28.1) des Verbindungskanals (20.1, 21.1) zur Speisung der Zentralen (5 und 6) verbindet.

7. Vorrichtung zum Kochen von Speisen nach Anspruch 5 oder 6, **dadurch gekennzeichnet, dass** die Enden der Befüllungs- und Rückflusskanäle (8.1 bis 8.4), die an die Zentralen (5 und 6) angrenzen, jeweils mit Magnetventilen (40.1 bis 40.4) versehen sind, die durch einen gemeinsamen Kanal (41) mit dem Einspeisungskanal (34) verbunden sind.

8. Vorrichtung zum Kochen von Speisen nach einem der Ansprüche 5 bis 7, **dadurch gekennzeichnet, dass** die Verbindungskanäle (20.4 und 21.4), die sich auf die andere Endwanne (4) beziehen, mit einem Abflusskanal (17) über jeweils zwei Ausgangskanäle (42 und 43) verbunden sind.

9. Vorrichtung zum Kochen von Speisen nach Anspruch 8, **dadurch gekennzeichnet, dass** jeder Ausgangskanal (42, 43) einen Kanal (20.4, 21.4) zur Verbindung mit dem Abflusskanal (17) zwischen dem Magnetventil (24.4, 30.4) und dem entsprechenden freien Ende (22.4, 28.4) des Verbindungskanals (20.4, 21.4) verbindet.

10. Vorrichtung zum Kochen von Speisen nach einem der vorhergehenden Ansprüche, **dadurch gekennzeichnet, dass** jeder Befüllungs- und Rückflusskanal (8.1 bis 8.4) mit zwei Magnetventilen (9.1 bis 9.4 und 10.1 bis 10.4) versehen ist, die parallel befestigt sind, wobei eines der Magnetventile (10.1 bis 10.4) vom Typ mit Durchflussregelung ist.

11. Vorrichtung zum Kochen von Speisen nach einem der vorhergehenden Ansprüche, **dadurch gekennzeichnet, dass** die Heizzentrale (5) und die Kühlzentrale (6) auf einer deutlich größeren Höhe als jener jeder Kochwanne (1 bis 4) angeordnet sind.

## Claims

1. Installation of food cooking equipment involving soaking in a hot liquid followed by soaking in at least one cold liquid, the said installation consisting of one or several cooking vats (1 to 4) each fitted with a liquid inflow, a central heating system (5) to obtain a hot liquid, a refrigeration system (6) to obtain a refrigerated liquid and filling pipes (8.1 to 8.4) for the transport of the said liquids up to the respective inflows of the said vats (1 to 4), **characterised in that** the said installation consists of reversible pumps (11.1 to 11.4) which are each intended, on the one hand, to permit the flow of the said liquids into a vat (1 to 4) in the direction of the said inflow and, on the other hand, to enable the return of the said liquids from the said vat inflow (1 to 4), via one of the aforesaid filling pipes (8.1 to 8.4) and in the direction of the said central systems (5 and 6).

2. Installation of food cooking equipment according to claim 1, of the type in which each vat (1 to 4) is fitted with a liquid outflow above the said inflow, **characterised in that** the said outflow is linked to the said filling pipe and corresponding return (8.1 to 8.4) by a pipe (18.1 to 18.4) fitted with a solenoid valve (19.1 to 19.4).

3. Installation of food cooking equipment according to claim 1 or 2, **characterised in that** in the part adjacent to the said central systems (5 and 6), each filling and return pipe (8.1 to 8.4) is linked to each of the said central systems (5 and 6) via two linking pipes (20.1 to 20.4 and 21.1 to 21.4) fitted with solenoid valves (24.1 to 24.4 and 30.1 to 30.4) respectively.

4. Installation of food cooking equipment according to claim 3, **characterised in that** the free extremities (22.1 to 22.4) of the said linking pipes (20.1 to 20.4) to the said central heating system (5) and the free extremities (28.1 to 28.4) of the said linking pipes (21.1 to 21.4) to the said central refrigeration system (5) are intended (*to be located on*) side (5a, 6a) of the said corresponding central system (5, 6) which is furthest away from the other central system (6, 5).

5. Installation of food cooking equipment according to claim 3 or 4 of the type which consists of a number of aligned vats (1 to 4), **characterised in that** the two linking pipes (20.1, 21.1) relative to one of the end vats (1) are linked to a same feeding pipe (34) with liquid at room temperature via two inflow pipes (35 and 36) respectively.

6. Installation of food cooking equipment according to claim 5, **characterised in that** each inflow pipe (35, 36) connects a linking pipe (20.1, 21.1) to the said feed pipe (34), between the solenoid valve (24.1, 30.1) and the corresponding free extremity (22.1, 28.1) of the said linking pipe (20.1, 21.1), to feed the said central systems (5 and 6).

7. Installation of food cooking equipment according to claim 5 or 6, **characterised in that** the extremities of the said filling and return pipes (8.1 to 8.4) which are adjacent to the said central systems (5 and 6) are respectively fitted with solenoid valves (40.1 to 40.4), and which are linked to the said feed pipe (34) by a common pipe (41).

8. Installation of food cooking equipment according to one of claims 5 to 7, **characterised in that** the said linking pipes (20.4 and 21.4) relative to the other end vat (4) are linked to an emptying pipe (17) via two outflow pipes (42 and 43) respectively.

9. Installation of food cooking equipment according to claim 8, **characterised in that** each outflow pipe (42, 43) connects a linking pipe (20.4, 21.4) to the said emptying pipe (17), between the solenoid valve (24.4, 30.4) and the corresponding free extremity (22.4, 28.4) of the said linking pipe (20.4, 21.4).

10. Installation of food cooking equipment according to one of the preceding claims, **characterised in that** each filling and return pipe (8.1 to 8.4) is fitted with two solenoid valves (9.1 to 9.4 and 10.1 to 10.4) mounted in parallel, one of the said solenoid valves (10.1 to 10.4 being of the flow control type.

11. Installation of food cooking equipment according to one of the preceding claims, **characterised in that** the said central heating (5) and refrigeration systems (6) are installed at a height well above that of each cooking vat (1 to 4).
